(19) **Europäisches Patentamt / European Patent Office / Office européen des brevets**

(11) **EP 3 511 224 B1**

(12) # EUROPEAN PATENT SPECIFICATION

(45) Date of publication and mention
of the grant of the patent:
**28.07.2021 Bulletin 2021/30**

(51) Int Cl.:
**B61L 27/00** *(2006.01)* **B61L 15/00** *(2006.01)*

(21) Application number: **18215465.8**

(22) Date of filing: **21.12.2018**

(54) **DYNAMIC ANALYSIS METHOD OF OPERATING SAFETY RISKS FOR A HIGH-SPEED TRAIN OPERATING CONTROL SYSTEM**

**DYNAMISCHES ANALYSEVERFAHREN VON BETRIEBSSICHERHEITSRISIKEN EINES BETRIEBSSTEUERUNGSSYSTEMS FÜR HOCHGESCHWINDIGKEITSZÜGE**

**PROCÉDÉ D'ANALYSE DYNAMIQUE DE RISQUES DE SÉCURITÉ CONCERNANT LE FONCTIONNEMENT D'UN SYSTÈME DE CONTRÔLE POUR TRAIN À GRANDE VITESSE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2017 CN 201711448051**

(43) Date of publication of application:
**17.07.2019 Bulletin 2019/29**

(73) Proprietor: **CASCO SIGNAL CO., LTD.**
**Shanghai 200071 (CN)**

(72) Inventors:
- **CHEN, Jun**
  **Shanghai 200071 (CN)**
- **ZHOU, Xin**
  **Shanghai 200071 (CN)**
- **CAO, Dening**
  **Shanghai 200071 (CN)**
- **WANG, Yangpeng**
  **Shanghai 200071 (CN)**
- **YANG, Wen**
  **Shanghai 200071 (CN)**
- **SHI, Ruiyin**
  **Shanghai 200071 (CN)**
- **YANG, Fengwei**
  **Shanghai 200071 (CN)**
- **SUN, Dianju**
  **Shanghai 200071 (CN)**

(74) Representative: **Winter, Brandl - Partnerschaft mbB**
**Alois-Steinecker-Straße 22**
**85354 Freising (DE)**

(56) References cited:
**US-A1- 2017 015 339     US-A1- 2017 124 234**

- **FRIEDEMANN BITSCH ET AL: "Effiziente Sicherheitsnachweisf?hrung mithilfe modellbasierter Systemanalyse - Efficient performance of safety cases with model-based system analysis", SIGNAL + DRAHT, vol. 109, no. 6, 12 June 2017 (2017-06-12) , pages 31-39, XP055381425, ISSN: 0037-4997**
- **FRANK MÜLLER: "Modell basierte Sicherheitskonzepte - Model-based safety concepts", SIGNAL + DRAHT, vol. 109, no. 3, 13 March 2017 (2017-03-13), pages 45-52, XP055356139,**

**Description**

**BACKGROUND OF THE INVENTION**

**1. Technical Field**

The invention relates to a safety technology of a rail transit system, and more particularly, to a dynamic analysis method for the running safety risks of a high-speed train running control system based on a combined manifold.

**2. Description of Related Art**

For a rail transit system, in addition to pursuing an ultra-high speed, safety is another goal that needs to be guaranteed. When a train is driven at a high speed, many factors interact in real time to affect the safety of the entire control system. In an actual situation, based on a systematic architecture combining a CTCS-2 train control system and an ATO (automatic train driving) sub-system, the ATP (train over speed protection) sub-system is controlled by way of setting a dynamic analysis function module for the train running safety risks in the ATO, which can directly achieve a safety protection of trains in a high-speed running phase. If a model can be constructed to dynamically describe the safety of a control system during the high-speed running of a train and realize the real-time calculation of a change process of the safety risks of the control system, then a dynamic monitoring technology and an online accident warning technology for the running safety risks of a high-speed train will be supported. The basic attribute of such a model should be an ability to dynamically describe the changes in the safety risks of a system at a high speed, and to predict the occurrence of an accident.

In the existing basic model capable of analyzing the changes in a safety state of a system, FMEA, HAZOP, Bow tie, etc. can output the discrete safety state indicators. However, if changes in a safety state of a system are considered a dynamic process, the output of an analytical model used should be a function that continuously reflects a safety state of a system relative to one or more factors. Some basic analytical models of a dynamic process, such as the Markov chain, Petri net and dynamic fault tree, can dynamically describe a process of changes in a safety state of a system. These models describe a process of a state transit of a system. However, for a complex dynamic system, due to a rapid expansion of a system state set, a complete transit process describing a safety state of a system makes the size of the dynamic model extremely large. Therefore, if people want to use these state transit models to output changes in the system safety risks in real time during high-speed running, they need to consume very large online computing resources.

On the other hand, the importance of a systematic safety dynamic analysis is to provide real-time and effective safety state information for front-line decision makers. In a high-speed train running phase, if dispatchers and train drivers are able to obtain intuitive and effective information reflecting changes in the safety state of a system and early warning of possible accidents, they will have the opportunity to make appropriate decisions and execute correct operations.

The document US 2017/0124234 A1 discloses a failure logic modelling method for a high-speed railway train operation control on-board system, which belongs to the field of failure diagnosis technology of train control systems. In summary, it is imperative to construct a new model to dynamically analyze the changes in safety risks during a running phase of a high-speed train control system.

**BRIEF SUMMARY OF THE INVENTION**

The objective of the present invention is to provide a dynamic analysis method for the running safety risks of a high-speed train running control system to overcome the disadvantages of the prior art described above.

To achieve this objective, the present invention adopts the following technical solution:

a dynamic analysis method of the running safety risks of a high-speed train running control system, comprising the following steps:

Step 1: constructing a system running state discriminating model based on a cusp manifold surface;
Step 2: determining the system running state;
Step 3: constructing a safety risk calculation model based on an elliptical umbilical manifold surface;
Step 4: outputting changes in running safety indicators and running risk indicators.

Preferably, Step 1 is specifically as follows:

for a control process that runs during a period of [0, τ], if the system is operated normally,

$$0 \leq \int_0^\tau DEdt + \int_0^\tau DBdt \leq \Phi_0,$$ where $\Phi_0$ is the loss of an acceptable system target; if the loss included in a target of a running system completed at the time of τ is less than $\Phi_0$, it is a normal acceptable system running state; if an unacceptable loss occurs at the time of τ, that is, an event occurs, $\int_0^\tau DEdt + \int_0^\tau DBdt > \Phi_0;$ where DE represents the degree of risk of the accumulated error and DB represents the degree of barrier of the accumulated grid;

based on the Riemann-Hugo Niort mutation, *DE* and *DB* are used as control variables and the degree of systematic safety (*DS*) is used as a state variable to establish a cusp manifold surface in the Cartesian coordinate system composed of three orthogonal variables of *DE, DB* and *DS;* on the coordinate axis, *DE, DB* and *DS* all take a positive number and increase uniformly along the axis from the origin; on the cusp manifold surface, the degree of systematic safety (DS) continuously changes with an arbitrary trajectory between a safe area represented by the upper half and a dangerous area represented by the lower half; if the cusp manifold surface is Ω, then the equation of Ω is:

$$\Omega(DE, DB, DS) = \eta(DE - \mu) + 2\omega(DB - v)DS + 4DS^3 = 0$$

wherein the parameters of $\eta$, $\omega$, $\mu$ and *v* are designed and determined by the systematic structure.

Preferably, the running state of the discriminating system is: using an event tree to quantitatively evaluate an error occurring in a control structure in a current running phase and a safety barrier executed in a control process, where the quantitative evaluation process needs to be based on a danger log, which includes the identification during the system design phase and the system running phase, a danger source generated based on statistics, the possible consequences of the danger source, the evolution path of the danger source and the safety barrier information.
Preferably, the running state of the discriminating system is specifically as follows:

first, the computer automatically identifies a danger source of $H_i$ in the current control structure, and the danger source of $H_i$ is an error event of $E_i$; based on the description of an event tree, the error of $E_i$ leads to the consequence of $C_\delta$ through the evolution path of $T_\delta$; according to a danger log, the statistical probability of $P_\delta$ and the consequent severity of $C_\delta$ of the error of $E_i$ passing the evolution path of $T_\delta$ are generated; based on the structure of the event tree, the safety barrier in the evolution path is automatically identified by the computer, and according to the danger log, the confidence level of the safety barrier of $B_j$ in the event tree of $E_i$ is $L_\varepsilon$, the degree of barrier is $U_\varepsilon$, and the number is $k_j$;
provided that a total of *n* errors occurs in the system control structure when the system runs to the current time, and a total of *m* safety barriers are executed in the system control process, the danger degree of the accumulated error is:

$$DE = \alpha = \sum_{i=1}^{n} \sum_{\delta=1}^{k_i} P_\delta C_\delta$$

the degree of barrier of the accumulated grid is:

$$DB = \beta = \sum_{j=1}^{m} \sum_{\varepsilon=1}^{k_j} L_\varepsilon U_\varepsilon$$

in the phase space of the cusp manifold surface, the state variable of *DS* is obtained according to the control variables of *DE* and *DB,* thus determining whether the system running state is in a state of safety or danger.

Preferably, Step 3 is specifically as follows:

provided that the system control process needs to complete *N* component functions to achieve a system goal, and the system which runs to the current phase control process has executed the *M* component functions, then the size of the system running progress is *M/N;* when the system running state is in a safety state, the running progress is *DP = γ = -M/N*; when the system is in a danger state, the running progress is *DP = y = M/N;*

because the variables of *DE, DB,* and *DP* are orthogonal to each other, the elliptical umbilical manifold surface of Λ is constructed in a control space composed of these three variables, and the equation of Λ is:

$$\begin{cases} \alpha = \gamma^2(\frac{3}{2} + \cos^2\theta - \sin^2\theta + 2\cos\theta) \\ \beta = \gamma^2(\frac{3\sqrt{3}}{2} + 2\cos\theta\sin\theta - 2\sin\theta) \end{cases}$$

(*α, β, γ*) respectively correspond to (*DE, DB, DP*), *i.e.*, the danger risk of the accumulated error, the degree of barrier of the accumulated grid and the system running process.

Preferably, Step 4 is specifically as follows:

after the cusp manifold surface of Ω is judged, when the system running state is in a safety state, the running safety indicator of the system is accurately quantitatively evaluated according to the elliptical umbilical manifold surface of Λ|γ < 0, and its size is the volume of *V(α,β,-γ|γ < 0)* of the closed surface of Λ|γ < 0 and the positive sign indicates that the system is in a safety state; when the system running state is in a danger state, the running risk indicator of the system can be accurately quantitatively evaluated according to the elliptical umbilical manifold surface of Λ|γ > 0, and its size is the volume of *V(α,β,γ|γ > 0)* of the closed surface of Λ|γ > 0, and the negative sign indicates that the system is in a danger state;

during a system running phase, the computer identifies the error and the executed safety barrier during the system control progress online, and determines whether the current system is in a state of safety or danger based on the state discriminating model; when the system is in a safety state, according to the degree of advancement of the system running process, the running safety indicator is output based on the safety risk calculation model; when the system is in a danger state, the running risk indicator is output based on the safety risk calculating model according to the degree of advancement of the system running process.

Compared with the prior art, the advantages of the present invention are as below:

1. the invention constructs a dynamic analysis model of the running safety risk of a high-speed train running control system based on combined manifolds, and completes the identification of the safety state of the system and the calculation of the safety risk indicators through the fusion of two manifolds on a mathematical framework;

2. the running state discriminating model is based on the cusp manifold surface, and its reasonable and concise calculation method is beneficial to an on-board computer to effectively determine the train running safety state in real time;

3. the safety risk calculation model is based on the elliptical umbilical manifold surface and has a complete mathematical structure, which can support the on-board computer to achieve an accurate calculation of the train running safety risk.

**BRIEF DESCRIPTION OF SEVERAL VIEWS OF THE DRAWINGS**

FIG. 1 is a schematic diagram of a dynamic analysis model of the system running safety risk based on combined manifolds;

FIG. 2 is a schematic diagram of an event tree model;

FIG. 3 is a schematic diagram of the structure and fault propagation path of the CTCS2+ATO train running control system;

FIG. 4 is a curved-surface diagram calculating the safety risks of the train control system when the train runs at a high speed;

FIG. 5 is a curved-surface diagram discriminating the running state of the train control system when the train runs at a high speed;

FIG. 6 is a curved-surface diagram calculating the safety risk of the train control system when extreme weather occurs;
FIG. 7 is a curved-surface diagram discriminating the running state of the train control system when extreme weather occurs;
FIG. 8 is a curved-surface diagram calculating the safety risk of the train control system when the equipment fails;
FIG. 9 is a curved-surface diagram discriminating the running state of the train control system when a device fault occurs.

**BRIEF DESCRIPTION OF SEVERAL VIEWS OF THE DRAWINGS**

A clear and complete description will be given hereinafter to the technical solution of the embodiments of the present invention, in combination with the drawings of the embodiments. Obviously, the embodiments described are only part of but not all of the embodiments of the present invention. Any other embodiments obtained by those skilled in the field based on the embodiments of the present invention without contributing creative labor are all within the protection scope of the present invention.

A dynamic analysis method for the running safety risk of a high-speed train running control system based on a combined manifold, comprising four specific construction steps as follows:
Step 1: constructing a system running state discriminating model based on a cusp manifold surface.

The current safety state of the system can be considered that the system has experienced the occurrence and accumulation of multiple events. Under a condition that the time measurement is sufficiently accurate, the events must occur one after the other, not concurrently at the same time. Therefore, under a condition that the observation time scale is sufficiently accurate, in the system operation phase, as the control process advances, the overall safety state of the system can show a trend of continuous changes with respect to the running time or other continuous variables.

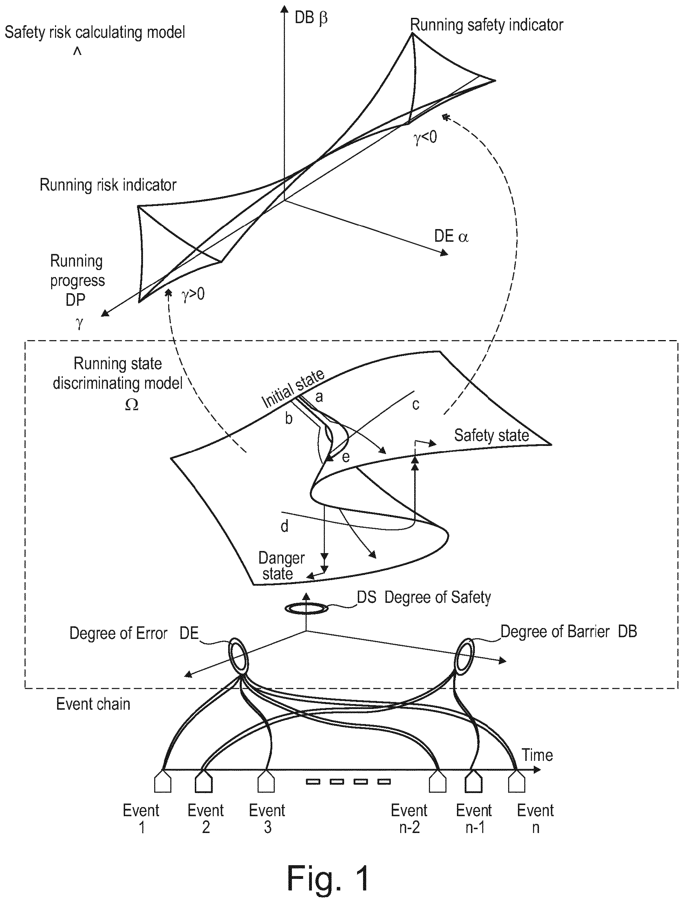

As shown by an event chain in FIG. 1, under a condition that the time measurement is sufficiently accurate, during a system control process, the abnormal events (*event 1, event 2, ..., event n*) occur sequentially in a chronological order.

Here, the normal event is defined as the precise execution of each sub-step required by a pre-designed system control process when the system is operated in an ideal external environment.

Anomalous events include at least one of the following three meanings: 1) changes in an external environment beyond the expected range, 2) deviations from the acceptable range that occur when the steps required by a control process are executed, and 3) no steps required by an execution control process, or additional steps which have been executed.

During the system control process, seen from the final results, when an abnormal event occurs, the operations of the system will end with a safety reaching of the goal, or end with the occurrence of an accident. The occurrence of an abnormal event may increase the trend of a system running state turned into a danger state (a state with losses), and may also increase the trend of a system running state turned into a safety state (a state in which the safety is guaranteed). The former case can be described as "the occurrence of an error;" the latter case can be described as "the execution of the grid."

Among the n abnormal events shown in the event chain in FIG. 1, some of the abnormal events can be described as the occurrence of errors, and other abnormal events can be described as the execution of the grid. As the running time advances, the occurrence and accumulation of errors make the system operations tend to be dangerous; the execution and accumulation of the grids make the system operations tend to be safe. The variable of *DE* is used to indicate the danger degree of the accumulated errors, and the variable of *DB* is used to indicate the degree of barrier of the accumulated grids. The following relationship must be established: $\int_0^\infty DEdt \geq \Phi$ and $\int_0^\infty DBdt = 0$. Here, $\Phi$ is the sum of the severity of all accidents generated by historical system operations. The above two equations describe two extreme cases: 1) if the system is running forever, and only errors occur during the operations without any gate execution, then the sum of the loss of all system targets (*i.e.,* the severity of the accident) must be no less than $\Phi$; 2) if the system is running forever, and no errors occur during the operations, but the grid is continuously executed, then the accident will never happen, and the system goal must not suffer any loss, that is, loss is 0.

In general, for a control process that runs during a period of $[0, \tau]$, if the system is running normally, $0 \leq \int_0^\tau DEdt + \int_0^\tau DBdt \leq \Phi_0$. Here, $\Phi_0$ is the loss of acceptable system goals. The above equation indicates that if the loss included in the target of a running system completed at the time of $\tau$ is less than $\Phi_0$, it is a normal acceptable system running state; but if an unacceptable loss occurs at the moment of $\tau$, that is, an accident occurs, then

$$\int_0^\tau DEdt + \int_0^\tau DBdt > \Phi_0.$$

Next, based on the Riemann-Hugo Niort mutation, *DE* and *DB* are used as control variables and the degree of systematic safety (DS) is used as a state variable to establish a cusp manifold surface in the Cartesian coordinate system composed of three orthogonal variables of *DE, DB* and *DS,* as shown in the running state discriminating model in FIG. 1; on the coordinate axis, *DE, DB* and *DS* all take a positive number and increase uniformly along the axis from the origin; on the cusp manifold surface, the degree of systematic safety (DS) continuously changes with an arbitrary trajectory between a safe area represented by the upper half and a dangerous area represented by the lower half; if the cusp manifold surface is $\Omega$, then the equation of $\Omega$ is:

$$\Omega(DE, DB, DS) = \eta(DE - \mu) + 2\omega(DB - v)DS + 4DS^3 = 0$$

Here, $\eta$, $\omega$, $\mu$ and *v* are designed and determined by the systematic structure.

On the cusp manifold surface of $\Omega$, the trajectory of *a* represents the process of continuous changes of the system running state from an initial state to a certain safety state; the trajectory of *b* represents the process of continuous changes of the system running state from an initial state to a danger state. It can be seen from the motion of the trajectory of *a* and the trajectory of *b* that a small perturbation in an initial state will make the state of a system turn into two distinct states at the end of a control process. For example, the failure of an on-board safety computer power supply at the beginning of the train will cause the running state of a system to be either a safety state or a danger state after the train has been running for a period of time; which state will occur depends on whether a safety barrier is executed or other faults occur.

The trajectory of c represents the process of a system running state turned from a safety state to a danger state, which describes the process from the change of a higher safe running state to the loss, and the jump in the process reflects that an accident occurs. The trajectory of d represents the process in which the system running state jumps from a danger state to a certain safety state; the process begins when the system has been running to a certain degree of loss, but the loss is gradually reduced by the implementation of emergency measures (the implementation of a safety barrier), and the system jumps back to a safety state, when the loss is reduced to a certain level. After the loss is generated, the operations of the system needs to return to a safety state by performing more or stronger safety barriers than before. Therefore, by comparing the trajectory of c and the trajectory of *d,* the existence of hysteresis can be found. In fact, a train operating control system has a high structural stability, and for systems with a high structural stability, a greater change is harder to be recovered, with a more obvious hysteresis. During a system running period, the system running state is either in a safety state or in a danger state; the jump of the system running state also occurs between a safety state and a danger state, and the jump does not pass through the initial state staying in the intermediate state represented by the middle of the cusp manifold surface.

The trajectory of e represents a process in which the system running state starts from an initial state, moves to the safe area represented by the upper half and then jumps to the dangerous area represented by the lower half to generate a loss. This process can be seen as a typical process of changes of the state of the system during the evolution of an accident.

The above analysis of changes of the system running state with a curved-surface trajectory can prove the rationality and feasibility of using the cusp manifold surface to judge a system running state.

Step 2: determining the system running state.

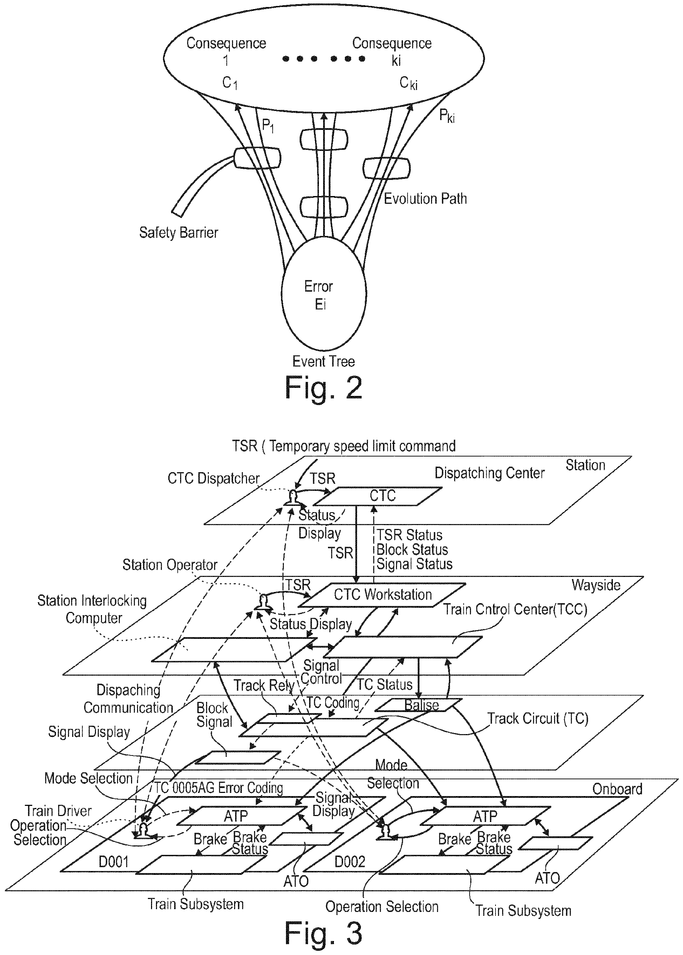

The event tree shown in FIG. 2 is used to quantitatively evaluate an error occurring in a control structure in a current running phase and a safety barrier executed in a control process. The quantitative assessment process needs to be based on a danger log, which includes the information such as the danger sources (statistical probabilities) identified and statistically identified during the system design phase and system operation phase, the possible consequences of the danger source (the degree of severity), and the evolution path of the danger source (the probability is the product of the statistical probability of all events contained in the path) and the grid (the confidence level and the degree of barrier).

Specifically, the computer first automatically identifies the source of danger of $H_i$ present in the current control structure. The danger source of $H_i$ is an error event of $E_i$. Based on the description of an event tree, the error of $E_i$ leads to the consequences of $C_\delta$ through the evolution path of $T_\delta$ (the severity degree of the consequences is also expressed by $C_\delta$ with a total of $k_i$ possibilities). According to the danger log, the statistical probability of $P_\delta$ of the error of $E_i$ passing through the evolution path of $T_\delta$ and the severity degree of the consequence of $C_\delta$ can be known.

Based on the structure of the event tree, the safety barrier in the evolution path is automatically identified by the computer; according to the danger log, the confidence level of the safety barrier of $B_j$ in the event tree of $E_i$ is $L_\varepsilon$, the degree of barrier is $U_\varepsilon$, and the number is $k_j$;

provided that a total of *n* errors occurs in the system control structure when the system runs to the current time, and a total of *m* safety barriers is executed in the system control process, the danger degree of the accumulated error is:

$$DE = \alpha = \sum_{i=1}^{n} \sum_{\delta=1}^{k_i} P_\delta C_\delta$$

the degree of barrier of the accumulated grid is:

$$DB = \beta = \sum_{j=1}^{m} \sum_{\varepsilon=1}^{k_j} L_\varepsilon U_\varepsilon$$

As shown in the running state discriminating model in FIG. 1, in the phase space of the cusp manifold surface, the state variable *of DS* is obtained according to the control variables of *DE* and *DB,* thus determining whether the system running state is in a state of safety (the upper half of the curved surface) or danger (the lower half of the curved surface).

Step 3: constructing a safety risk calculating model based on an elliptical umbilical manifold surface.

When the cusp manifold surface is used to judge the system running state to more accurately quantitatively evaluate the running risk indicator when the system is in a danger state, or the running safety indicator when it is in a safety state, the safety risk calculating model needs to be further constructed based on the elliptical umbilical manifold surface.

Provided that the system control process needs to complete N component functions to achieve a system goal, and the system which runs to the current phase control process has executed *M* component functions, then the size of the system running progress is *M/N;* when the system running state is in a safety state, the running progress is *DP = y = -M/N*; when the system is in a danger state, the running progress is *DP = y = M/N.* Here, the sign for the running progress is used to determine whether the system running state is in a state of safety or danger, but the calculated running safety indicator and running risk indicator are both positive and practical.

As the system control process advances, the complexity of the internal functional interaction of the system gradually increases. The higher the complexity of the system, the worse the structural stability is and the worse the safety in the system running phase is. Therefore, the running progress of *DP* also directly affects the system running safety state. because the variables of *DE, DB,* and *DP* are orthogonal to each other, the elliptical umbilical manifold surface of $\Lambda$ is constructed in a control space composed of these three variables, $\Lambda$ and the equation is:

$$\begin{cases} \alpha = \gamma^2 (\dfrac{3}{2} + \cos^2 \theta - \sin^2 \theta + 2 \cos \theta) \\ \beta = \gamma^2 (\dfrac{3\sqrt{3}}{2} + 2 \cos \theta \sin \theta - 2 \sin \theta) \end{cases}$$

($\alpha$, $\beta$, $\gamma$) respectively correspond to (*DE, DB, DP*), *i.e.,* the danger risk of the accumulated error, the degree of barrier of the accumulated grid and the system running process.

Step 4: outputting changes in running safety indicators and running risk indicators.

The shape of the curved surface of A is shown in the safety risk calculating model in FIG. 1. after the cusp manifold surface of $\Omega$ is judged, when the system running state is in a safety state, the running safety indicator of the system is accurately quantitatively evaluated according to the elliptical umbilical manifold surface of $\Lambda|\gamma < 0$, and its size is the volume of $V(\alpha, \beta, -\gamma|\gamma < 0)$ of the closed surface of $\Lambda|\gamma < 0$ and the positive sign indicates that the system is in a safety state; when the system running state is in a danger state, the running risk indicator of the system can be accurately quantitatively evaluated according to the elliptical umbilical manifold surface of $\Lambda|\gamma > 0$, and its size is the volume of $V(\alpha, \beta, \gamma|\gamma > 0)$ of the closed surface of $\Lambda|\gamma > 0$, and the negative sign indicates that the system is in a danger state;

during a system running phase, the computer identifies the error and the executed safety barrier during the system control progress online, and determines whether the current system is in a state of safety or danger based on the state discriminating model; when the system is in a safety state, according to the degree of advancement of the system running process, the running safety indicator is output based on the safety risk calculating model; when the system is in a danger state, the running risk indicator is output based on the safety risk calculating model according to the degree of advancement of the system running process.

**DETAILED DESCRIPTION OF THE INVENTION**

The following uses a method of the system dynamic analysis based on combined manifolds, combined with the CTCS2+ATO train operating control system, to analyze the specific situation of train rear-end collision in a control process, as a typical embodiment.

The scenario is described as follows:

The running line is governed by the CTCS2+ATO train control system as shown in FIG. 3. The D001 train enters a high-speed operation stage at a time of $t_1$ and runs smoothly.

An extreme weather occurs at a time of $t_2$. Extreme weather causes a rail circuit to send an abnormal code, which forces the on-board safety computer of the D001 train to brake, thus causing the D001 train to stay in the 0005AG section and the driver could not perform a mode selection to run the train for a long period of time.

At $t_3$, the extreme weather makes the rail circuit data acquisition unit of a station train control center faulty so that the dispatch center displays no train occupancy of the 0005AG section, and makes all the section signal lights in front of the subsequent D002 train open.

After a wireless communication failure of the operators at all levels of the system, the D002 train and the D001 train are rear-ended.

In the whole system control process, the ATO sub-system specific function module analyzes the train operating safety risk in real time based on the dynamic analysis model of the system running safety, and realizes the train running safety control through the ATP subsystem.

Step 1: constructing a system running state discriminating model based on a cusp manifold surface.

According to the failure propagation path represented by the broken line in FIG. 3, an abnormal event (*i.e.,* an error) occurring in the system during the control process is identified, including component failure and personnel failure. The specific abnormal events (*i.e.,* errors) identified are shown in Table 1, where Table 1 is the statistical probability of abnormal events (errors) and the severity of the consequences.

Table 1

| | Anomalous event (error) | Statistical probability $P_\delta$ (year$^{-1}$) | Consequent severity $C_\delta$ (FWI) |
|---|---|---|---|
| $E_1$ | TCC sends error occupancy information | 0.111540193 | 0.745 |
| $E_2$ | A rail circuit sends an anomaly code | 0.234316521 | 0.932 |
| $E_3$ | A train is forced to brake and cannot be re-started | 0.312982202 | 0.815 |
| $E_4$ | A CTC dispatcher does not track the D001 train conditions | 0.042189924 | 0.211 |
| $E_5$ | A station dispatcher does not keep in touch with a CTC dispatcher or a train driver | 0.042189924 | 0.356 |
| $E_6$ | A D001 train driver does not report the fault conditions to a CTC dispatcher | 0.312982202 | 0.195 |
| $E_7$ | A station dispatcher does not report the fault conditions to a CTC dispatcher or D002 train driver | 0.042189924 | 0.497 |
| $E_8$ | Communication failure occurs between a D001 train driver and a CTC dispatcher | 0.355365816 | 0.486 |
| $E_9$ | Communication interruption occurs between a station dispatcher and a D002 train driver | 0.355365816 | 0.486 |
| $E_{10}$ | A CTC dispatcher does not notify a D002 train driver of | 0.042189924 | 0.602 |
| | the emergency | | |

Step 2: Determining the system running state.

The event tree shown in FIG. 2 is used to quantitatively evaluate an error occurring in a control structure in a current running phase and a safety barrier executed in a control process. Here, the danger log of the system similar to the actual situation is selected for analysis; the results of quantitative evaluation obtained are shown in Table 1 and Table 2, wherein Table 2 shows the confidence level and degree of barrier of the safety barrier.

Table 2

| | Safety barrier | Confidence level $L_\varepsilon$ (year$^{-1}$) | Degree of barrier $U_\varepsilon$ (FWI) |
|---|---|---|---|
| $B_1$ | Grid-extreme weather | 0.111540193 | 0.745 |
| $B_2$ | Grid-rail circuit failure | 0.234316521 | 0.932 |
| $B_3$ | Grid-signal failure | 0.312982202 | 0.815 |

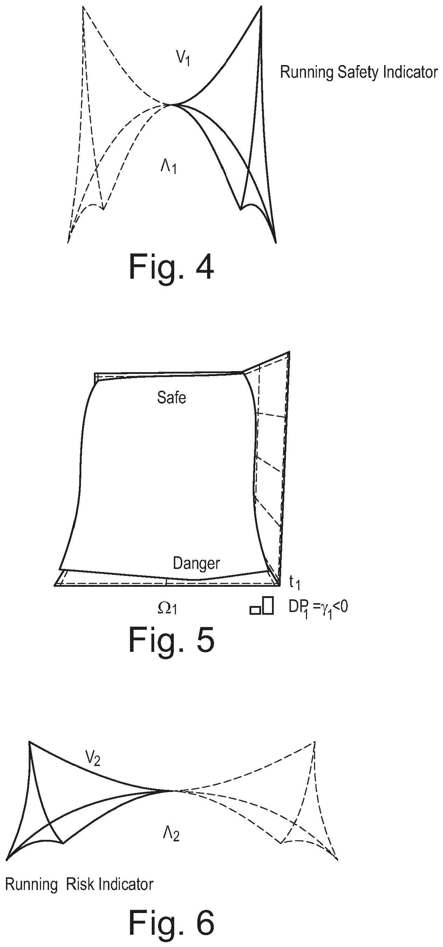

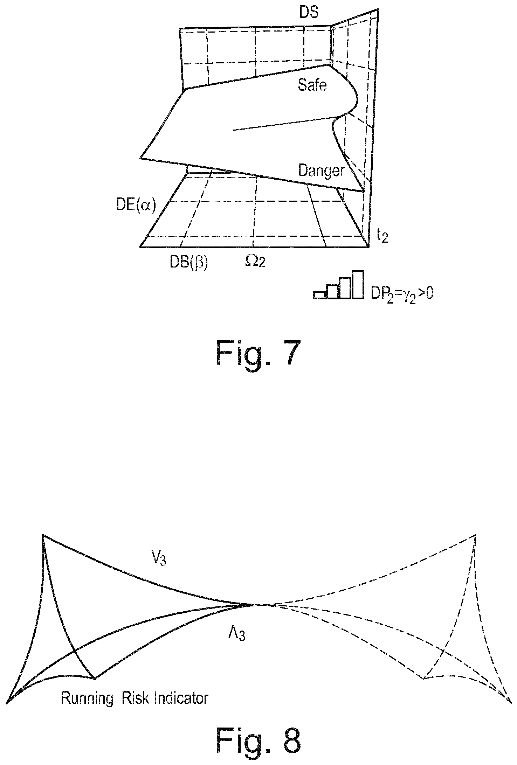

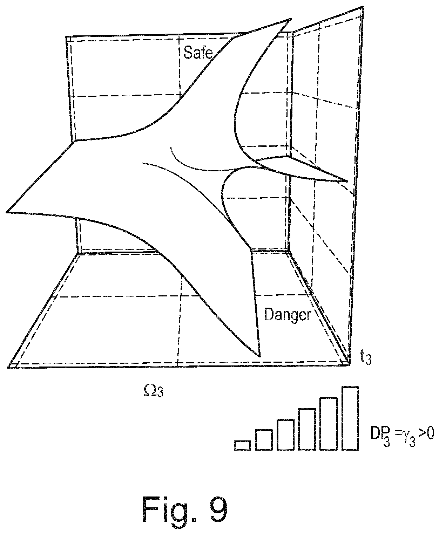

According to the running state discriminating model in FIG. 1, the state variable of *DS* is calculated by way of using the control variables *(DE,DB)* to determine whether the running state of the system is in a safety state (the upper half of the curved surface) or a danger state (the lower half of the curved surface). The running state discriminating surfaces at and at a time of $t_1$, $t_2$ and $t_3$ are shown in $\Omega_1$ $\Omega_2$ and $\Omega_3$ in FIG. 4-9 respectively.

Step 3: constructing a safety risk calculating model based on an elliptical umbilical manifold surface.

After the cusp manifold surface is used to judge the system running state, according to the specific structure of the CTCS2+ATO train running control system shown in FIG. 3 and the propagation path of the fault during the evolution of the train rear-end accident, it is determined that the system control process respectively achieves the running progress of $DP_1$, $DP_2$ and $DP_3$ at a time of $t_1$, $t_2$ and $t_3$. The elliptical umbilical manifold surface is constructed in the control space composed of the variables of DE, DB and DP, thus outputting the safety risk calculating surfaces at a time of $t_1$, $t_2$ and $t_3$, as shown in $\Lambda_1$, $\Lambda_2$ and $\Lambda_3$ in FIG. 4-9 respectively.

Step 4: outputting changes in running safety indicators and running risk indicators.

In the CTCS2+ATO train control system, the accident evolution process of the following train rear-end specific scenarios, the running state discriminating surfaces of $\Omega_1$, $\Omega_2$ and $\Omega_3$ of the system control process at a time of $t_1$, $t_2$ and $t_3$, and the safety risk calculation surfaces of $\Lambda_1$, $\Lambda_2$ and $\Lambda_3$ are shown in FIG. 4-9.

When the system is running to a time of $t_1$, the running state discriminating surface of $\Omega_1$ is not folded, and the system running state smoothly changes from the initial state to a safety state and remains in a safety state; at this time, the system running safety indicator is calculated as $V_1 = 0.390$.

When the system runs to a time of $t_2$, the running state discriminates the curved surface of $\Omega_2$ to a certain folding extent, and the system running state jumps from the safety state to a danger state; at this time, the system operation risk indicator is calculated as $-V_2 = -0.502$.

When the system is running to a time of $t_3$, the folding degree of the running state discriminating surface of $\Omega_3$ continues to increase, and the system running state reaches a more danger state; at this time, the system running risk indicator is calculated as $-V_3 = -1.041$.

In the system control process, the change of the safety risk indicator of the system safety is 0.390→-0.502→-1.041, which reflects the complete accident evolution process in which the running state of the system jumps from the initial safety state to a danger state and further deteriorates. The change process is consistent with the reality, and the rationality and availability of the dynamic risk analysis model of system operation safety based on combined manifold are verified.

The forgoing are only specific embodiments of the present invention, but the scope of the present invention is not limited thereto. Therefore, the scope of the invention should be determined according to the scope of the Claims.

## Claims

1. A dynamic analysis method of the running safety risk of a high-speed train running control system, **characterized by** and comprising the following steps:

   Step 1: constructing a system running state discriminating model based on a cusp manifold surface;
   Step 2: determining the system running state;
   Step 3: constructing a safety risk calculating model based on an elliptical umbilical manifold surface;
   Step 4: outputting changes in running safety indicators and running risk indicators.

2. The method as claimed in Claim 1, **characterized in that** Step 1 is specifically as follows:

   for a control process that runs during a period of $[0, \tau]$, if the system is operated normally,

$$0 \leq \int_0^\tau DEdt + \int_0^\tau DBdt \leq \Phi_0,$$ where $\Phi_0$ is the loss of an acceptable system target; if the loss included in a target of a running system completed at the time of $\tau$ is less than $\Phi_0$, it is a normal acceptable system running state; if an unacceptable loss occurs at the time of $\tau$, that is, an event occurs,

$$\int_0^\tau DEdt + \int_0^\tau DBdt > \Phi_0;$$ where DE represents the degree of risk of the accumulated error and DB represents the degree of barrier of the accumulated grid;

based on the Riemann-Hugo Niort mutation, *DE* and *DB* are used as control variables and the degree of systematic safety (DS) is used as a state variable to establish a cusp manifold surface in the Cartesian coordinate system composed of three orthogonal variables of *DE, DB* and *DS;* on the coordinate axis, *DE, DB* and *DS* all take a positive number and increase uniformly along the axis from the origin; on the cusp manifold surface, the degree of systematic safety (DS) continuously changes with an arbitrary trajectory between a safe area represented by the upper half and a dangerous area represented by the lower half; if the cusp manifold surface is $\Omega$, then the equation of $\Omega$ is:

$$\Omega(DE, DB, DS) = \eta(DE - \mu) + 2\omega(DB - v)DS + 4DS^3 = 0$$

where the parameters of $\eta$, $\omega$, $\mu$ and v are designed and determined by the systematic structure.

3. The method as claimed in Claim 1, **characterized in that** the running state of the discriminating system is: using an event tree to quantitatively evaluate an error occurring in a control structure in a current running phase and a safety barrier executed in a control process, where the quantitative evaluation process needs to be based on a danger log, which includes the identification during the system design phase and the system running phase, a danger source generated based on the statistics, the possible consequences of the danger source, the evolution path of the danger source and the safety barrier information.

4. The method as claimed in Claim 3, **characterized in that** the running state of the discriminating system is specifically as follows:

first, the computer automatically identifies a danger source of $H_i$ in the current control structure, and the danger source of $H_i$ is an error event of $E_i$; based on the description of an event tree, the error of $E_i$ leads to the consequence of $C_\delta$ through the evolution path of $T_\delta$; according to a danger log, the statistical probability of $P_\delta$ and the consequent severity of $C_\delta$ of the error of $E_i$ passing the evolution path of $T_\delta$ generated; based on the structure of the event tree, the safety barrier in the evolution path is automatically identified by the computer, and according to the danger log, the confidence level of the safety barrier of $B_j$ in the event tree of $E_i$ is $L_\varepsilon$, the degree of barrier is $U_\varepsilon$, and the number is $k_j$;

provided that a total of *n* errors occurs in the system control structure when the system runs to the current time, and a total of *m* safety barriers is executed in the system control process, the danger degree of the accumulated error is:

$$DE = \alpha = \sum_{i=1}^{n} \sum_{\delta=1}^{k_i} P_\delta C_\delta$$

the degree of barrier of the accumulated grid is:

$$DB = \beta = \sum_{j=1}^{m} \sum_{\varepsilon=1}^{k_j} L_\varepsilon U_\varepsilon$$

in the phase space of the cusp manifold surface, the state variable of *DS* is obtained according to the control variables of *DE* and *DB,* thus determining whether the system running state is in a state of safety or danger.

5. The method as claimed in Claim 1, **characterized in that** Step 3 is specifically as follows:

provided that the system control process needs to complete *N* component functions to achieve a system goal, and the system which runs to the current phase control process has executed *M* component functions, then the size of the system running progress is *M/N;* when the system running state is in a safety state, the running progress is *DP = y = -M/N;* when the system is in a danger state, the running progress is *DP = γ = M/N;* because the variables of *DE, DB,* and *DP* are orthogonal to each other, the elliptical umbilical manifold surface of Λ is constructed in a control space composed of these three variables, and the equation of Λ is:

$$\begin{cases} \alpha = \gamma^2(\dfrac{3}{2} + \cos^2\theta - \sin^2\theta + 2\cos\theta) \\ \beta = \gamma^2(\dfrac{3\sqrt{3}}{2} + 2\cos\theta\sin\theta - 2\sin\theta) \end{cases}$$

($\alpha, \beta, \gamma$)respectively correspond to (*DE, DB, DP*), ie, the danger risk of the accumulated error, the degree of barrier of the accumulated grid and the system running process.

6. The method as claimed in Claim 1, **characterized in that** Step 4 is specifically as follows:

after the cusp manifold surface of Ω is judged, when the system running state is in a safety state, the running safety indicator of the system is accurately quantitatively evaluated according to the elliptical umbilical manifold surface of $\Lambda|\gamma < 0$, and its size is the volume of $V(\alpha,\beta,-\gamma|\gamma < 0)$ of the closed surface of $\Lambda|\gamma < 0$ and the positive sign indicates that the system is in a safety state; when the system running state is in a danger state, the running risk indicator of the system can be accurately quantitatively evaluated according to the elliptical umbilical manifold surface of $\Lambda|\gamma > 0$, and its size is the volume of $V(\alpha,\beta,\gamma|\gamma > 0)$ of the closed surface of $\Lambda|\gamma > 0$, and the negative sign indicates that the system is in a danger state;
during a system running phase, the computer identifies the error and the executed safety barrier during the system control progress online, and determines whether the current system is in a state of safety or danger based on the state discriminating model; when the system is in a safety state, according to the degree of advancement of the system running process, the running safety indicator is output based on the safety risk calculating model; when the system is in a danger state, the running risk indicator is output based on the safety risk calculating model according to the degree of advancement of the system running process.

## Patentansprüche

1. Dynamisches Analyseverfahren eines Betriebssicherheitsrisikos eines Hochgeschwindigkeitszug-Betriebssteuerungssystems, **dadurch gekennzeichnet, dass** es die folgenden Schritte aufweist:

Schritt 1: Konstruieren eines Systembetriebszustands-Diskriminierungsmodells basierend auf einer Höckerverteilerfläche;
Schritt 2: Bestimmen eines Systembetriebszustands;
Schritt 3: Konstruieren eines Sicherheitsrisiko-Berechnungsmodells basierend auf einer elliptischen Nabelverteilerfläche; und
Schritt 4: Ausgeben von Änderungen in Betriebssicherheitsindikatoren und Betriebsrisikoindikatoren.

2. Verfahren nach Anspruch 1, **dadurch gekennzeichnet, dass** der Schritt 1 wie folgt spezifiziert ist:

für einen Steuerungsprozess, der während einer Periode von [0,τ] läuft, wenn das System normal betrieben wird, die Gleichung $0 \le \int_0^\tau DEdt + \int_0^\tau DBdt \le \Phi_0$ erfüllt wird, wobei $\Phi_0$ ein Verlust eines akzep- tablen Systemziels ist; wenn der Verlust, der in einem Ziel eines Betriebssystems enthalten ist, das zum Zeitpunkt von τ abgeschlossen ist, kleiner als $\Phi_0$ ist, es ein normaler akzeptabler Systembetriebszustand ist; wenn ein inakzeptabler Verlust zum Zeitpunkt $\tau$ auftritt, d. h. ein Ereignis auftritt, die Gleichung

$$\int_0^\tau DEdt + \int_0^\tau DBdt > \Phi_0$$

erfüllt wird; wobei $DE$ einen Grad eines Risikos von kumulierten Fehlern und DB einen Grad einer Barriere von kumulierten Gittern darstellt;

basierend auf der Riemann-Hugo-Niort-Mutation $DE$ und $DB$ als Steuerungsvariablen und ein Grad einer systematischen Sicherheit ($DS$) als Zustandsvariable verwendet werden, um eine Höckerverteilerfläche im kartesischen Koordinatensystem zu etablieren, die aus drei orthogonalen Variablen von $DE, DB$ und $DS$ besteht; auf der Koordinatenachse $DE, DB$ und $DS$ alle eine positive Zahl haben und gleichmäßig entlang der Achse vom Ursprung zunehmen; auf der Höckerverteilerfläche sich der Grad der systematischen Sicherheit ($DS$) kontinuierlich mit einer beliebigen Trajektorie zwischen einem sicheren Bereich, der durch die obere Hälfte dargestellt wird, und einem gefährlichen Bereich ändert, der durch die untere Hälfte dargestellt wird; wenn die Höckerverteilerfläche $\Omega$ ist, die Gleichung von $\Omega$ dann wie folgt erfüllt wird:

$$\Omega(DE, DB, DS) = \eta(DE - \mu) + 2\omega(DB - v)DS + 4DS^3 = 0$$

wobei die Parameter von $\eta$, $\omega$, $\mu$ und $v$ durch eine systematische Struktur entworfen und bestimmt werden.

3. Verfahren nach Anspruch 1, **dadurch gekennzeichnet, dass** das Diskriminierungssystem den folgenden Betriebszustand hat: unter Verwendung eines Ereignisbaums zur quantitativen Bewertung eines in einer Steuerungsstruktur in einer aktuellen Betriebsphase auftretenden Fehlers und einer in einem Steuerungsprozess ausgeführten Sicherheitsbarriere, wobei der quantitative Bewertungsprozess auf einem Gefahrenprotokoll basieren muss, das eine Identifikation während einer Systementwurfsphase und einer Systembetriebsphase, eine basierend auf der Statistik erzeugte Gefahrenquelle, mögliche Folgen der Gefahrenquelle, einen Evolutionspfad der Gefahrenquelle und Sicherheitsbarriereninformationen umfasst.

4. Verfahren nach Anspruch 3, **dadurch gekennzeichnet, dass** der Betriebszustand des Diskriminierungssystems wie folgt spezifiziert ist:

der Computer zunächst automatisch eine Gefahrenquelle $H_i$ in der aktuellen Steuerungsstruktur identifiziert, und die Gefahrenquelle $H_i$ ein Fehlerereignis $E_i$ ist; basierend auf einer Beschreibung eines Ereignisbaums der Fehler $E_i$ über den Evolutionspfad $T_\delta$ zu der Folge $C_\delta$ führt; und gemäß einem Gefahrenprotokoll die statistische Wahrscheinlichkeit $P_\delta$ und die Folgeschwere $C_\delta$ des Fehlers $E_i$ über den Evolutionspfad $T_\delta$ erzeugt werden; basierend auf einer Struktur des Ereignisbaums die Sicherheitsbarriere im Evolutionspfad automatisch vom Computer identifiziert wird, und gemäß dem Gefahrenprotokoll ein Vertrauensniveau der Sicherheitsbarriere von $B_j$ im Ereignisbaum von $E_i$ $L_\varepsilon$ ist, der Grad der Barriere $U_\varepsilon$ ist und die Anzahl $k_j$ ist; vorausgesetzt, dass insgesamt n Fehler in der Systemsteuerungsstruktur auftreten, wenn das System bis zum aktuellen Zeitpunkt läuft, und insgesamt m Sicherheitsbarrieren im Systemsteuerungsprozess ausgeführt werden, ein Gefahrengrad des kumulierten Fehlers wie folgt ist:

$$DE = \alpha = \sum_{i=1}^{n} \sum_{\delta=1}^{k_i} P_\delta C_\delta$$

der Grad der Barriere des kumulierten Gitters wie folgt ist:

$$DB = \beta = \sum_{j=1}^{m} \sum_{\varepsilon=1}^{k_j} L_\varepsilon U_\varepsilon$$

in einem Phasenraum der Höckerverteilerfläche sich die Zustandsvariable von $DS$ gemäß den Steuerungsvariablen von $DE$ und $DB$ ergibt und somit bestimmt, ob sich der Systembetriebszustand einem sicheren oder gefährlichen Zustand entspricht.

5. Verfahren nach Anspruch 1, **dadurch gekennzeichnet, dass** der Schritt 3 wie folgt spezifiziert ist:

vorausgesetzt, dass der Systemsteuerungsprozess N Komponentenfunktionen abschließen muss, um ein Systemziel zu erreichen, und das System, das zum aktuellen Phasensteuerungsprozess läuft, $M$ Komponentenfunktionen ausgeführt hat, eine Größe eines Systembetriebsfortschritts dann $M/N$ ist; wenn der Systembetriebszustand einem Sicherheitszustand entspricht, der Betriebsfortschritt $DP = \gamma = -M/N$ ist; wenn sich das System in einem Gefahrenzustand befindet, der Betriebsfortschritt $DP = y = M/N$ ist;
weil die Variablen von $DE$, $DB$ und $DP$ orthogonal zueinander sind, die elliptische Nabelverteilerfläche von $\Lambda$ in einem Steuerungsraum konstruiert wird, der aus diesen drei Variablen besteht, und die Gleichung von $\Lambda$ wie folgt erfüllt wird:

$$\begin{cases} \alpha = \gamma^2(\dfrac{3}{2} + \cos^2\theta - \sin^2\theta + 2\cos\theta) \\ \beta = \gamma^2(\dfrac{3\sqrt{3}}{2} + 2\cos\theta\sin\theta - 2\sin\theta) \end{cases}$$

$(\alpha,\beta,\gamma)$ jeweils $(DE,DB,DP)$ entsprechen, d.h. dem Gefahrenrisiko des kumulierten Fehlers, dem Grad der Barriere des kumulierten Gitters und dem Systembetriebsprozess.

6. Verfahren nach Anspruch 1, **dadurch gekennzeichnet, dass** der Schritt 4 wie folgt spezifiziert ist:

nachdem die Höckerverteilerfläche von $\Omega$ beurteilt wird, wenn der Systembetriebszustand einem Sicherheitszustand entspricht, der Betriebssicherheitsindikator des Systems genau quantitativ gemäß der elliptischen Nabelverteilerfläche von $\Lambda|\gamma < 0$ bewertet wird, und seine Größe das Volumen von $V(\alpha,\beta,-\gamma|\gamma < 0)$ der geschlossenen Fläche von $\Lambda|\gamma < 0$ ist und das positive Vorzeichen zeigt an, dass sich das System in einem Sicherheitszustand befindet; wenn sich der Systembetriebszustand einem Gefahrenzustand entspricht, der Betriebsrisikoindikator des Systems entsprechend der elliptischen Nabelverteilerfläche von $\Lambda|\gamma > 0$ genau quantitativ bewertet werden kann, und seine Größe das Volumen von $V(\alpha,\beta,\gamma|\gamma > 0)$ der geschlossenen Fläche von $\Lambda|\gamma > 0$ ist, und das negative Vorzeichen zeigt an, dass sich das System in einem Gefahrenzustand befindet;
während einer Systembetriebsphase der Computer den Fehler und die ausgeführte Sicherheitsbarriere während des Systemsteuerungsfortschritts online identifiziert und bestimmt, ob sich das aktuelle System in einem Sicherheits- oder Gefahrenzustand befindet, basierend auf dem Zustandsdiskriminierungsmodell; wenn sich das System in einem Sicherheitszustand befindet, der Betriebssicherheitsindikator basierend auf dem Sicherheitsrisiko-Berechnungsmodell ausgegeben wird; wenn sich das System in einem Gefahrenzustand befindet, der Betriebsrisikoindikator basierend auf dem Sicherheitsrisiko-Berechnungsmodell gemäß einem Weiterentwicklungsgrad des Systembetriebsprozesses ausgegeben wird.

**Revendications**

1. Procédé d'analyse dynamique du risque de sécurité de fonctionnement d'un système de commande de fonctionnement de train à grande vitesse, **caractérisé par** et comprenant les étapes suivantes :

Étape 1 : construction d'un modèle de discrimination d'état de fonctionnement de système sur la base d'une surface de variété à points de rebroussement ;
Étape 2 : détermination de l'état de fonctionnement du système ;
Étape 3 : construction d'un modèle de calcul de risque de sécurité sur la base d'une surface de variété à ombilics elliptiques ;
Étape 4 : production de changements dans les indicateurs de sécurité de fonctionnement et indicateurs de risque de fonctionnement.

2. Procédé selon la revendication 1, **caractérisé en ce que** l'Étape 1 est définie spécifiquement comme suit :

pour un processus de contrôle qui s'exécute pendant une période de $[0, \tau]$, si le système est utilisé normalement,

$$0 \leq \int_0^\tau DE\,dt + \int_0^\tau DB\,dt \leq \Phi_0$$ où $\Phi_0$ est la perte d'une cible système acceptable ; si la perte incluse dans une cible d'un système en fonctionnement réalisée au moment de $\tau$ est inférieure à $\Phi_0$, il s'agit d'un état de fonctionnement de système acceptable normal ; si une perte inacceptable se produit au moment de $\tau$, à savoir,

un événement se produit, $\int_0^\tau DE\,dt + \int_0^\tau DB\,dt > \Phi_0$ ; où DE représente le degré de risque de l'erreur accumulée et DB représente le degré de barrière de la grille accumulée ;

sur la base de la mutation de Riemann-Hugo Niort, DE et DB sont utilisés comme variables de contrôle et le degré de sécurité systématique (DS) est utilisé comme une variable d'état pour établir une surface de variété à points de rebroussement dans le système de coordonnées carthésiennes composée de deux variables orthogonales de DE, DB et DS ; sur l'axe de coordonnées, DE, DB et DS prennent tous un nombre positif et augmentent uniformément le long de l'axe à partir de l'origine ; sur la surface de variété à points de rebroussement, le degré de sécurité systématique (DS) varie en continu avec une trajectoire arbitraire entre une zone sûre représentée par la moitié supérieure et une zone dangereuse représentée par la moitié inférieure ; si la surface de variété à points de rebroussement est $\Omega$, alors l'équation de $\Omega$ est :

$$\Omega(\text{DE, DB, DS}) = \eta(\text{DE} - \mu) + 2\omega(\text{DB} - v)\text{DS} + 4\text{DS}^3 = 0$$

où les paramètres de $\eta$, $\omega$, $\mu$ et $v$ sont désignés et déterminés par la structure systématique.

3. Procédé selon la revendication 1, **caractérisé en ce que** l'état de fonctionnement du système de discrimination est : l'utilisation d'un arbre d'événements pour évaluer quantitativement une erreur se produisant dans une structure de contrôle dans une phase de fonctionnement actuelle et une barrière de sécurité exécutée dans un processus de contrôle, où le processus d'évaluation quantitative doit être basé sur un journal de dangers, qui inclut l'identification pendant la phase de conception du système et la phase de fonctionnement du système, une source de danger générée sur la base des statistiques, les conséquences possibles de la source de danger, le chemin évolutif de la source de danger et les informations de barrière de sécurité.

4. Procédé selon la revendication 3, **caractérisé en ce que** l'état de fonctionnement du système de discrimination est défini spécifiquement comme suit :

tout d'abord, l'ordinateur identifie de manière automatique une source de danger de $H_i$ dans la structure de contrôle actuelle, et la source de danger de $H_i$ est un événement d'erreur de $E_i$ ; sur la base de la description d'un arbre d'événements, l'erreur de $E_i$ conduit à la conséquence de $C_\delta$ à travers le chemin évolutif de $T_\delta$ ; selon un journal de dangers, la probabilité statistique de $P_\delta$ et la gravité consécutive de $C_\delta$ de l'erreur de $E_i$ dépassant le chemin évolutif de $T_\delta$ généré ;

sur la base de la structure de l'arbre d'événements, la barrière de sécurité dans le chemin évolutif est identifiée automatiquement par l'ordinateur, et selon le journal de dangers, le niveau de confiance de la barrière de sécurité de $B_j$ dans l'arbre d'événements de $E_i$ est $L_\varepsilon$, le degré de barrière est $U_\varepsilon$ et le nombre est $k_j$ ;

à condition qu'un total de n erreurs se produise dans la structure de contrôle du système lorsque le système fonctionne jusqu'à l'heure actuelle, et qu'un total de m barrières de sécurité soit exécuté dans le processus de contrôle du système, le degré de danger de l'erreur accumulée est :

$$DE = \alpha = \sum_{i=1}^{n} \sum_{\delta=1}^{k_i} P_\delta C_\delta$$

le degré de barrière de la grille accumulée est :

$$DB = \beta = \sum_{j=1}^{m} \sum_{\varepsilon=1}^{k_j} L_\varepsilon U_\varepsilon$$

dans l'espace de phase de la surface de variété à points de rebroussement, la variable d'état de DS est obtenue selon les variables de contrôle de DE et DB, puis en déterminant si l'état de fonctionnement du système est dans un état de sécurité ou de danger.

5. Procédé selon la revendication 1, **caractérisé en ce que** l'Étape 3 est définie spécifiquement comme suit :

à condition que le processus de contrôle du système doive réaliser N fonctions composantes pour obtenir un objectif système, et que le système qui fonctionne jusqu'au processus de contrôle de phase actuel ait exécuté M fonctions composantes, alors la taille de la progression du fonctionnement du système est M/N ; lorsque l'état de fonctionnement du système est dans un état de sécurité, la progression de fonctionnement est DP = $\gamma$ = -M/N ; lorsque le système est dans un état de danger, la progression de fonctionnement est DP = $\gamma$ = M/N ; étant donné que les variables de DE, DB et DP sont orthogonales les unes aux autres, la surface de variété à ombilics elliptiques de A est construite dans un espace de contrôle composé de ces trois variables, et l'équation de A est :

$$\begin{cases} \alpha = \gamma^2 (\dfrac{3}{2} + \cos^2 \theta - \sin^2 \theta + 2\cos \theta) \\ \beta = \gamma^2 (\dfrac{3\sqrt{3}}{2} + 2\cos \theta \sin \theta - 2\sin \theta) \end{cases}$$

($\alpha$, $\beta$, $\gamma$) correspondent respectivement à (DE, DB, DP), à savoir, le risque de danger de l'erreur accumulée, le degré de barrière de la grille accumulée et le processus de fonctionnement du système.

6. Procédé selon la revendication 1, **caractérisé en ce que** l'étape 4 est définie spécifiquement comme suit :

après que la surface de variété à points de rebroussement de $\Omega$ est estimée, lorsque l'état de fonctionnement du système est dans un état de sécurité, l'indicateur de sécurité de fonctionnement du système est évalué quantitativement avec précision selon la surface de variété à ombilics elliptiques de $\Lambda|\gamma < 0$, et sa taille est le volume de $V(\alpha, \beta, \gamma|\gamma < 0)$ de la surface fermée de $\Lambda|\gamma < 0$ et le signe positif indique que le système est dans un état de sécurité ; lorsque l'état de fonctionnement du système est dans un état de danger, l'indicateur de risque de fonctionnement du système peut être évalué quantitativement avec précision selon la surface de variété à ombilics elliptiques de $\Lambda|\gamma > 0$, et sa taille est le volume de $V(\alpha, \beta, \gamma|\gamma > 0)$ de la surface fermée de $\Lambda|\gamma > 0$ et le signe négatif indique que le système est dans un état de danger ;
pendant une phase de fonctionnement du système, l'ordinateur identifie l'erreur et la barrière de sécurité exécutée pendant la progression du contrôle du système en ligne, et détermine si le système actuel est dans un état de sécurité ou de danger sur la base du modèle de discrimination d'état; lorsque le système est dans un état de sécurité, selon le degré d'avancement du processus de fonctionnement du système, l'indicateur de sécurité de fonctionnement est produit sur la base du modèle de calcul de risque de sécurité ; lorsque le système est dans un état de danger, l'indicateur de risque de fonctionnement est produit sur la base du modèle de calcul de risque de sécurité selon le degré d'avancement du processus de fonctionnement du système.

Fig. 1

Consequence
1
$C_1$

Consequence
ki
$C_{ki}$

• • • • • •

$P_1$

$P_{ki}$

Evolution Path

Safety Barrier

Error
Ei

Event Tree

## Fig. 2

TSR ( Temporary speed limit command

CTC Dispatcher

TSR

Dispatching Center

Station

CTC

Status
Display

TSR

TSR Status
Block Status
Signal Status

Station Operator

TSR

CTC Workstation

Wayside

Station Interlocking
Computer

Status Display

Train Cntrol Center(TCC)

Signal
Control

Dispaching
Communication

Track Rely

TC Status

TC Coding

Balise

Track Circuit (TC)

Block
Signal

Signal Display

Mode Selection

TC 0005AG Error Coding

Signal
Display

Mode
Selection

Onboard

Train Driver
Operation
Selection

ATP

ATP

Brake Brake
Status

Brake Brake
Status

D001

D002

ATO

ATO

Train Subsystem

Operation Selection

Train Subsystem

## Fig. 3

$V_1$

$\Lambda_1$

Running Safety Indicator

## Fig. 4

Safe

Danger

$t_1$

$\Omega_1$

$DP_1 = \gamma_1 < 0$

## Fig. 5

$V_2$

$\Lambda_2$

Running Risk Indicator

## Fig. 6

DS

Safe

Danger

DE(α)

DB(β)    $\Omega_2$

$t_2$

$DP_2 = \gamma_2 > 0$

# Fig. 7

$V_3$

$\Lambda_3$

Running Risk Indicator

# Fig. 8

Safe

Danger

$t_3$

$\Omega_3$

$DP_3 = \gamma_3 > 0$

# Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170124234 A1